(19) Europäisches Patentamt
European Patent Office
Office européen des brevets

(11) Veröffentlichungsnummer: **0 087 394**
**B1**

(12) # EUROPÄISCHE PATENTSCHRIFT

(45) Veröffentlichungstag der Patentschrift: **14.05.86**

(51) Int. Cl.⁴: **C 07 C 125/08,** C 08 G 59/40

(21) Anmeldenummer: **83810069.1**

(22) Anmeldetag: **17.02.83**

(54) **Verfahren zur Herstellung von N-substituierten N-Cyancarbonsäure-amiden und deren Verwendung.**

(30) Priorität: **23.02.82 CH 1106/82**

(43) Veröffentlichungstag der Anmeldung: **31.08.83 Patentblatt 83/35**

(45) Bekanntmachung des Hinweises auf die Patenterteilung: **14.05.86 Patentblatt 86/20**

(84) Benannte Vertragsstaaten: **CH DE FR GB LI**

(56) Entgegenhaltungen: **CHEMICAL ABSTRACTS, Band 78, Nr. 13, 2. April 1973, Seite 451, Spalte 2, Nr. 84537b, Columbus, Ohio, USA**

(73) Patentinhaber: **CIBA-GEIGY AG, Klybeckstrasse 141, CH-4002 Basel (CH)**

(72) Erfinder: **Stockinger, Friedrich, Stutzrain 4, CH-4434 Hölstein (CH)**
Erfinder: **Lohse, Friedrich, Prof., Dr., Buchenstrasse 23, CH-4104 Oberwil (CH)**
Erfinder: **Zondler, Helmut, Dr., Oberwilerstrasse 49, CH-4103 Bottmingen (CH)**

**EP 0 087 394 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von N-substituierten N-Cyancarbonsäureamiden und die Verwendung der erfindungsgemäss hergestellten Verbindungen als Härtungsmittel für Epoxidharze.

In Journal of Organic Chemistry, Vol. 28 (1963), Seite 1816–1821, wird berichtet, dass sich der N-Cyanacetimidomethylester beim Erhitzen auf 165 °C teilweise zum isomeren N-Cyan-N-methylacetamid umlagert. Aus Chemische Berichte, 99 (10), 1966, Seite 3155–3162, geht ferner hervor, dass durch Spaltung von Methyl-tert.-butylcarbodiimid mit Benzoylchlorid neben Isobutylen und tert.-Butylchlorid das N-Cyan-N-methylbenzamid und unter Verwendung von Trichloracetylchlorid als Spaltmittel unter anderem das N-Cyan-N-methyltrichloracetamid entstehen.

Es wurde nun gefunden, dass man in einfacherer Weise und in besseren Ausbeuten N-substituierte N-Cyancarbonsäureamide erhält, wenn man N-Cyancarbonsäureamidsalze in einem polaren aprotischen Lösungsmittel mit einem Alkylierungsmittel, wie beispielsweise Alkylhalogenid oder Dimethylsulfat, umsetzt.

Gegenstand der Erfindung ist somit ein Verfahren zur Herstellung von N-substituierten N-Cyancarbonsäureamiden der Formel I

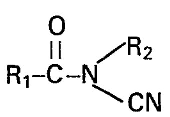

(I),

worin $R_1$ ein Wasserstoffatom, Alkyl mit 1–16 C-Atomen, Cycloalkyl mit 5–8 C-Atomen oder Aryl mit 6 oder 10 Ring-C-Atomen und $R_2$ ein Alkyl mit 1–8 C-Atomen, Cycloalkyl mit 5–8 C-Atomen oder Benzyl bedeuten, dadurch gekennzeichnet, dass man 1 Mol eines N-Cyancarbonsäureamidsalzes der Formel II

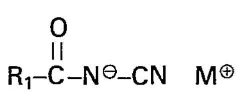

(II),

worin $R_1$ die gleiche Bedeutung wie in Formel II hat und $M^{\oplus}$ für ein Na- oder K-Kation steht, entweder mit 1 Mol einer Verbindung der Formel III

$R_2$–X (III),

worin $R_2$ die gleiche Bedeutung wie in Formel I hat und X für ein Chlor-, Brom- oder Jodatom steht, oder auch, für den Fall, dass $R_2$ in Formel I nur Methyl oder Äthyl bedeutet, mit 1 Mol Dimethyl- bzw. Diäthylsulfat oder Trimethyl- bzw. Triäthylphosphonat als Alkylierungsmittel in einem polaren aprotischen Lösungsmittel umsetzt.

Die Alkylgruppe $R_1$ kann geradkettig oder verzweigt, unsubstituiert oder substituiert oder auch durch Äthersauerstoffatome unterbrochen sein. Geeignete Substituenten sind beispielsweise Chlor- oder Bromatome sowie die Nitrogruppe. Die Cycloalkylgruppe $R_1$ kann gegebenenfalls ebenfalls mit solchen Substituenten substituiert sein. Als Beispiele solcher Alkylgruppen seien genannt: Methyl, Chlormethyl, Äthyl, 1-Chloräthyl, 2-Bromäthyl, n-Propyl, Isopropyl, 3-Brompropyl, n-Butyl, sek.-Butyl, n-Pentyl, 2-Pentyl, n-Hexyl, n-Heptyl, 3-Heptyl, n-Octyl und n-Dodecyl.

Die Arylgruppe $R_1$ kann unsubstituiert oder substituiert sein, wie zum Beispiel durch 1 oder 2 Halogenatome, besonders Chlor oder Brom, 1 oder 2 Nitrogruppen oder durch 1 oder 2 Alkyl- oder Alkoxygruppen mit 1–4, vor allem 1 oder 2 C-Atomen. Als Beispiele solcher Arylgruppen seien genannt: Phenyl, p-Nitrophenyl, 3,5-Dinitrophenyl, p-Tolyl, o-Tolyl, 4-Chlor-1-nitrophenyl, 2-Methoxyphenyl, Naphthyl, und β-Chlornaphthyl.

Vorzugsweise setzt man bei dem erfindungsgemässen Verfahren Verbindungen der Formel II ein, worin $R_1$ ein Wasserstoffatom, Alkyl mit 1–4 C-Atomen oder Phenyl bedeutet und $M^{\oplus}$ für ein Na-Kation steht.

Die Alkylgruppe $R_2$ kann ebenfalls geradkettig oder verzweigt, unsubstituiert oder substituiert sein. Als Substituenten kommen die gleichen wie bei der Alkylgruppe $R_1$ in Frage. Die Cycloalkylgruppe $R_2$ und die Benzylgruppe können gegebenenfalls ebenfalls solche Substituenten aufweisen.

Vorzugsweise setzt man bei dem erfindungsgemässen Verfahren Verbindungen der Formel III ein, worin $R_2$ ein Alkyl mit 1–4 C-Atomen und X ein Chlor-, Brom- oder Jodatom bedeuten oder man verwendet als Alkylierungsmittel Dimethylsulfat.

Die Verbindungen der Formeln II und III stellen bekannte Verbindungen dar.

Geeignete polare aprotische Lösungsmittel sind zum Beispiel Dimethylformamid, Dimethylacetamid, Dimethylpropionamid, N-Methylpyrrolidon, Dimethylsulfoxid, Sulfolan, Hexamethylphosphorsäuretriamid, Tetramethylharnstoff oder die zu synthetisierende Verbindung. Die Menge des beim erfindungsgemässen Verfahren einzusetzenden polaren aprotischen Lösungsmittels ist nicht kritisch. Im allgemeinen wird das Lösungsmittel in solchen Mengen verwendet, dass die Ausgangsverbindung der Formel II als 5–70%-ige Lösung, vorzugsweise als 10–50%-ige Lösung vorliegt.

Das erfindungsgemässe Verfahren kann in einem weiten Temperaturbereich von etwa 20 bis 180 °C durchgeführt werden. Die bevorzugte Umsetzungstemperatur liegt zwischen 40 und 120 °C.

Die erfindungsgemäss hergestellten N-substituierten N-Cyancarbonsäureamide können als Ausgangsstoffe zur Herstellung von Isomelaminen verwendet werden. Hierbei werden durch Entacyclierung der Verbindungen der Formel I n-Alkylcyanamide gebildet, die zu Trialkylisomelaminen trimerisierbar sind.

Es wurde ferner gefunden, dass die nach dem erfindungsgemässen Verfahren erhaltenen N-substituierten N-Cyancarbonsäureamide wertvolle Härtungsmittel für Epoxidharze darstellen.

Gegenstand der vorliegenden Erfindung ist somit auch die Verwendung der N-substituierten N-Cyancarbonsäureamide der Formel I in härtbaren, aus Epoxidharzen und den N-Cyancarbonsäureamiden bestehenden Mischungen.

In diesen härtbaren Mischungen wird die Menge des als Härtungsmittel eingesetzten N-substituierten N-Cyancarbonsäureamids so berechnet, dass normalerweise 0,75 bis 1,25 Äquivalente N-Cyancarbonsäureamidgruppe auf 1 Epoxidäquivalent kommen. Vorzugsweise verwendet man das N-substituierte N-Cyancarbonsäureamid und die Epoxidharzkomponente in äquivalenten Mengen.

Für die härtbaren Mischungen sind vorzugsweise solche Epoxidharze verwendbar, welche direkt an Sauerstoff-, Stickstoff- oder Schwefelatome gebundene Gruppen der Formel IV

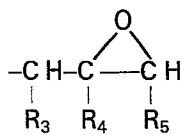 (IV)

enthalten, worin entweder $R_3$ und $R_5$ je ein Wasserstoffatom darstellen, in welchem Fall $R_4$ ein Wasserstoffatom oder eine Methylgruppe bedeutet, oder $R_3$ und $R_5$ zusammen $-CH_2CH_2-$ darstellen, in welchem Fall $R_4$ ein Wasserstoffatom bedeutet.

Als Beispiele solcher Harze seien Polyglycidyl- und Poly-(β-methylglycidyl)- ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidyl- und Poly(β-methylglycidyl)- äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Äther lassen sich mit Epichlorhydrin aus acyclischen Alkoholen, wie Äthylenglykol, Diäthylenglykol und höheren Poly-(oxyäthylen) -glykolen, Propan-1,2-diol und Poly-(oxypropylen)- glykolen, Propan-1,3-diol, Butan-1,4-diol, Hexan-2,4,6-triol, Glycerin, 1,1,1-Trimethylolpropan, Pentaerythrit und Sorbit, aus cycloaliphatischen Alkoholen, wie Resorcit, Chinit, Bis-(4-hydroxycyclohexyl) -methan, 2,2-Bis- (4-hydroxycyclohexyl)- propan und 1,1-Bis- (hydroxymethyl)- cyclohexen-3, und aus Alkoholen mit aromatischen Kernen, wie N,N-Bis- (2-hydroxyäthyl) -anilin und p,p'-Bis-(2-hydroxyäthylamino) -diphenylmethan, herstellen. Ferner sind auch Epoxidharze aus einkernigen Phenolen, wie Resorcin und Hydrochinon, und mehrkernigen Phenolen, wie Bis- (4-hydroxyphenyl)- methan, 4,4'-Dihydroxydiphenyl, Bis-(4-hydroxyphenyl)- sulfon, 1,1,2,2-Tetrakis-(4-hydroxyphenyl)- äthan, 2,2-Bis- (4-hydroxyphenyl)- propan (Bisphenol A) und 2,2-Bis-(3,5-dibrom-4-hydroxyphenyl)- propan sowie aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolacken geeignet.

Weitere geeignete Poly- (N-glycidyl)- Verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4- methylaminophenyl)-methan, sowie Triglycidylisocyanurat oder N,N'-Diglycidylderivate von cyclischen Alkylenharnstoffen, wie Äthylenharnstoff und 1,3-Propylenharnstoff, oder Hydantoinen, wie 5,5-Dimethylhydantoin, erhältlich sind.

Beispiele für Epoxidharze mit Gruppen der Formel IV, worin $R_3$ und $R_5$ zusammen eine $-CH_2CH_2$-Gruppe bedeuten, sind Bis-(2,3-epoxycyclopentyl)- äther, 2,3-Epoxycyclopentylglycidyläther und 1,2-Bis- (2,3-epoxycyclopentyloxy)- äthan.

Ebenfalls einsetzbar sind auch Epoxidharze, in denen einige oder sämtliche Epoxidgruppen mittelständig sind, wie Vinylcyclohexendioxyd, Limonendioxyd, Dicyclopentadiendioxyd, der 3,4-Epoxycyclohexylmethylester der 3',4'-Epoxycyclohexancarbonsäure sowie dessen 6,6'-Dimethylderivat, der Bis-(3,4-Epoxycyclohexancarbonsäureester) des Äthylenglykols, Adipinsäurebis- (3,4-epoxy-6-methylcyclohexylester) und 3-(3,4-Epoxycyclohexyl)- 8,9-epoxy-2,4-dioxaspiro [5,5] undecan.

Die erfindungsgemässen härtbaren Mischungen können ferner noch Plastifizierungsmittel, wie Dibutylphthalat, Dioctylphthalat oder Trikresylphosphat, oder Additive enthalten, wie Füllstoffe, Verstärkungsmittel, Färbemittel, Fliessmittel, flammhemmende Stoffe und Formtrennmittel. Geeignete Streckmittel, Füllstoffe und Verstärkungsmittel sind beispielsweise Asbest, Asphalt, Bitumen, Glasfasern, Textilfasern, Kohlenstoff- oder Borfasern, Glimmer, Tonerde, Gips, Titandioxid, Kreide, Quarzmehl, Cellulose, Kaolin, gemahlener Dolomit, Wollastonit, Kieselerde mit grosser spezifischer Oberfläche (erhältlich unter dem Handelsnamen «Aerosil»), mit langkettigen

Aminen modifizierte Tonerde (erhältlich unter dem Handelsnamen «Bentone»), gepulvertes Poly-(vinylchlorid), Polyolefin oder Aminoplast, Metallpulver, wie Aluminium- oder Eisenpulver. Flammschutzmittel, wie Antimontrioxid, können ebenfalls den härtbaren Mischungen zugegeben werden.

Die folgenden Beispiele beschreiben die Erfindung näher. Wenn nichts anderes vermerkt ist, bedeuten Teile Gewichtsteile.

Beispiel 1: N-Isopropyl-N-cyanacetamid.

Man löst 31,8 g (0,30 Mol) Na-Acetylcyanamid in 75 ml Dimethylformamid bei 100 °C und lässt innerhalb 1 1/2 Stunden 36,9 g (0,30 Mol) Isopropylbromid zutropfen. Nach einer Nachreaktion von 3 Stunden bei 100 °C gibt man 200 ml Aceton zu und saugt das abgeschiedene NaBr ab (28,2 g = 0,27 Mol). Danach wird das Aceton am Rotationsverdampfer entfernt und der Rückstand zur Isolierung aller destillierbarer Anteile im Wasserstrahlvakuum destilliert. Die fraktionierte Destillation dieses Destillats über eine Drehbandkolonne ergibt 14,3 g (37,8% der Theorie) gaschromatographisch einheitliches Produkt vom Siedepunkt 107 °C/90 mbar.

Elementaranalyse: $C_6H_{10}N_2O$ (M=126,16)

| | | |
|---|---|---|
| berechnet: | C 57,12% | gefunden: C 57,07% |
| | H 7,99% | H 8,14% |
| | N 22,21% | N 22,28% |

$^1$H-NMR-Spektrum: in ppm: 4,4 (Septett, NCH); 2,3 (Singulette, $CH_3CO$); 1,2 (Dublett, $CH_3$).

Im Vorlauf und Nachlauf sind nach gaschromatographischer Untersuchung insgesamt weitere 6,9 g (18,3%) an obiger Verbindung enthalten. Die Gesamtausbeute beträgt also 56,1% (der Theorie). Als Nebenprodukt erhält man 2,7 g (7,1%) reinen N-Cyanoacetimidoisopropylester

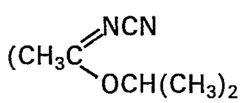

) vom Siedepunkt 135 °C/ 90 mbar.

Beispiel 2: N-n-Butyl-N-cyanacetamid.

Man löst 221 g (2,085 Mol) Na-Acetylcyanamid in 500 ml Dimethylformamid bei 90 °C, lässt auf 70 °C abkühlen und tropft dann bei 70 °C 285,6 g (2,085 Mol) n-Butylbromid innerhalb 1 1/2 Stunden zu. Nach einer Nachreaktion von 10 Stunden bei 70 °C wird das abgeschiedene Na-Bromid abgesaugt und aus dem Filtrat der gesamte destillierbare Anteil durch Vakuumdestillation abgetrennt. Die fraktionierte Destillation dieses Destillats über eine 60 cm hohe Füllkörperkolonne ergibt 216,4 g (74,1% der Theorie) Reinprodukt vom Siedepunkt 105 °C/34 mbar.

Elementaranalyse: $C_7H_{12}N_2O$ (M=140,19)

| | | |
|---|---|---|
| berechnet: | C 59,98% | gefunden: C 59,90% |
| | H 8,63% | H 8,82% |
| | N 19,99% | N 19,92% |

$^1$H-NMR-Spektrum in ppm: 3,4 (Triplett, $NCH_2$); 2,2 (Singulett, $CH_3CO$); 1,4 (Multiplett, $CH_2$); 0,8 (Triplett, $CH_3$).

Beispiel 3: N-Isobutyl-N-cyanacetamid.

Zu einer Lösung von 140,5 g (1,33 Mol) Na-Acetylcyanamid in 150 ml Dimethylformamid werden bei 100 °C 167,6 g (1,20 Mol) Isobutylbromid innerhalb 1 1/2 Stunden zugetropft. Man rührt 20 Stunden bei 100 °C, lässt erkalten, fügt zur besseren Abscheidung des NaBr 600 ml Aceton zu und saugt ab. Das Filtrat wird am Rotationsverdampfer vom Aceton befreit und zur Entfernung von Salzresten mit 500 ml $H_2O$, 40 g Eisessig und 250 ml Chloroform bei pH 4–5 im Scheidetrichter geschüttelt. Nach dem Abtrennen, dreimaligen Nachextrahieren mit je 50 ml $CHCl_3$ und Trocknen der vereinigten Extrakte mit $Na_2SO_4$ wird das $CHCl_3$ am Rotationsverdampfer entfernt, und der Rückstand über eine Füllkörperkolonne fraktioniert destilliert. Man erhält 93,3 g (55,5% der Theorie) Reinprodukt vom Siedepunkt 81 °C/17 mbar. Die Destillation des Vorlaufs und des Rückstands über eine Drehbandkolonne ergibt weitere 17,4 g (10,3%) Produkt, sodass die Gesamtausbeute 65,8% beträgt.

Elementaranalyse: $C_7H_{12}N_2O$ (M=140,19)

| | | |
|---|---|---|
| berechnet: | C 59,98% | gefunden: C 59,97% |
| | H 8,63% | H 8,88% |
| | N 19,99% | N 20,00% |

$^1$H-NMR-Spektrum in ppm: 3,3 (Dublett, $CH_2$); 2,35 (Singulett, $CH_3CO$); 2,0 (Septett, CH); 0,9 (Dublett, $CH_3$).

Als Nebenprodukt entstehen 8,6 g (5,1%) N-Cyanoacetimidoisobutylester

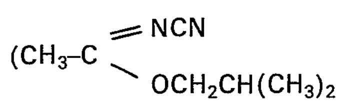

) vom Siedepunkt 105 °C/ 17 mbar.

Beispiel 4: N-n-Heptyl-N-cyanacetamid.

Zu einer Lösung von 21,2 g (0,20 Mol) Na-Acetylcynamid in 50 ml Dimethylformamid werden bei 85 °C 36,0 g (0,20 Mol) 1-Bromheptan zugetropft. Man lässt 2 Stunden nachreagieren und saugt bei Raumtemperatur vom NaBr ab. Das Filtrat wird mit 50 ml $H_2O$ versetzt und mit Chloroform extrahiert. Abtrennung des Lösungsmittels am Rotationsverdampfer und Destillation des Rohprodukts über eine Drehbandkolonne gibt 24,3 g (66,7% der Theorie) Reinprodukt vom Siedepunkt 124 °C/18 mbar.

Elementaranalyse: $C_{10}H_{18}N_2O$ (M=182,27)

| | | |
|---|---|---|
| berechnet: | C 65,90% | gefunden: C 65,87% |
| | H 9,96% | H 9,93% |
| | N 15,37% | N 15,39% |

$^1$H-NMR-Spektrum in ppm: 3,5 (Triplett,

$CH_2N$); 2,3 (Singulett, $CH_3CO$); 0,9 (Triplett, $CH_3$).

Beispiel 5: N-Benzyl-N-cyanacetamid.

106,1 g (1,0 Mol) Natriumacetylcyanamid und 151,9 g (1,0 Mol +2% Überschuss) Benzylchlorid werden in 500 ml Dimethylformamid bei 100–112 °C 4 Stunden und 20 Minuten lang zur Reaktion gebracht und anschliessend filtriert. Das Filtrat wird vollständig am Rotationsverdampfer bei 60 °C im Vakuum eingeengt und man erhält 146,7 g (88,7% der Theorie) eines braunen, viskosen Rückstandes, der in 290 ml Diisopropyläther umkristallisiert wird. Die Reinausbeute beträgt 111,0 g (63,7% der Theorie) und das Produkt schmilzt bei 42 °C.

Elementaranalyse: $C_{10}H_{10}N_2O$ (M=174,2)

| | | |
|---|---|---|
| berechnet: | C 68,95% | gefunden: C 68,78% |
| | H 5,79% | N 5,77% |
| | N 16,08% | N 15,91% |

Anwendungsbeispiele

In den folgenden Beispielen wird die Bestimmung der Reaktivität der Harz-Härter-Mischung durch Thermoanalyse und die Bestimmung der Glasumwandlungstemperatur wie folgt vorgenommen:

a) Thermoanalyse:

Zur Bestimmung der Reaktivität wird die Differential-Thermoanalyse (DTA) herangezogen. Etwa 20 mg des zu prüfenden Harz-Härtergemisches werden in einem kleinen Al-Tiegel in der Messkammer eines DTA-Gerätes (TA-2000 der Fa. METTLER-Instrumente AG, CH-Greifensee) mit einer Aufheizgeschwindigkeit von 4 °C/Minute erwärmt und die Temperaturdifferenz gegenüber einem miterwärmten leeren Tiegel laufend aufgezeichnet. Aus der so erhaltenen Kurve werden als die Reaktivität charakterisierende Grössen die Temperaturen für den Reaktionsbeginn ($T_B$), für die maximale Reaktionsgeschwindigkeit ($T_{RG\,max}$) und für das Ende der Reaktion ($T_E$), abgelesen.

b) Bestimmung der Glasumwandlungstemperatur (GUT)

4 g der Harz-Härtermischung werden jeweils in einen dünnwandigen Al-Tiegel mit etwa 5 cm Durchmesser gegossen und darin ausgehärtet. Der so erhaltenen Scheibe wird eine Probe zur Bestimmung der Glasumwandlungstemperatur des vernetzten Polymeren mit Hilfe der Differential-Thermoanalyse entnommen. Im Umwandlungspunkt ändert sich die spez. Wärme; diese Änderung wird als Wendepunkt in der vom DTA-Gerät (TA-2000 der Fa. METTLER-Instrumente AG, CH-Greifensee) aufgezeichneten Kurve registriert. Die Glasumwandlungstemperatur erlaubt Rückschlüsse auf die Formbeständigkeit des erhaltenen Polymeren in der Wärme.

Beispiel I

100 Teile eines Epoxidharzes auf Basis von Bisphenol A mit einem Epoxidgehalt von 5,78 Äquivalenten/kg und einer Viskosität von 5000 m Pa·s bei 25 °C, 56,6 Teile N-Methyl-N-cyanacetamid (entsprechend 1 Äquivalent Cyangruppe auf 1 Epoxidäquivalent) und 0,24 Teile 1-Methylimidazol (0,005 Mol auf 1 Epoxidäquivalent) werden bei 50 °C vermengt. Von dieser klaren Lösung wird die Reaktivität (Gelierzeit in Minuten (') und Sekunden (") ) und nach Aushärtung die Glasumwandlungstemperatur (GUT) und die Zugscherfestigkeit bestimmt.

| | | |
|---|---|---|
| Gelierzeit bei | 180 °C | 21'20" |
| | 160 °C | 93' |
| Thermoanalyse | $T_B$ | 101 °C |
| | $T_{RG_{max}}$ | 174 °C |
| | $T_E$ | 228 °C |

Nach Härtung während 6 Stunden bei 120 °C und 6 Stunden bei 180 °C:

| | | |
|---|---|---|
| GUT | (°C) | 84 |
| Zugscherfestigkeit ($N/mm^2$) nach DIN 53183 | | 9,5 |

(DIN = Deutsche Industrienorm).

Beispiel II

100 Teile eines Epoxidharzes auf Basis von Bisphenol A mit einem Epoxidgehalt von 2,1 Äquivalenten/kg und einem Erweichungsbereich von etwa 50 °C, 20,6 Teile N-Methyl-N- cyanacetamid (entsprechend einem Äquivalentverhältnis von 1:1) und 0,09 Teile 1-Methylimidazol werden in einer Schlagmühle homogenisiert. Das so erhaltene Gemenge weist folgende Eigenschaften auf:

| | | |
|---|---|---|
| Gelierzeit bei | 180 °C | 17'20" |
| | 160 °C | 46,30" |
| | 140 °C | 75' |
| Thermoanalyse | $T_b$ | 102 °C |
| | $T_{RGmax}$ | 156 °C |
| | $T_E$ | 248 °C |

Nach Härtung während 6 Stunden bei 120 °C und 6 Stunden bei 180 °C:

| | | |
|---|---|---|
| GUT | (°C) | 87 |
| Zugscherfestigkeit ($N/mm^2$) | | 19 |

Beispiel III

Beispiel II wird wiederholt, ohne dass 1-Methylimidazol als Beschleunigungsmittel zugegeben wird. Das homogene Gemenge weist folgende Eigenschaften auf:

| | | |
|---|---|---|
| Gelierzeit bei 180 °C | | 21'50" |
| Thermoanalyse | $T_B$ | 123 °C |
| | $T_{RGmax}$ | 165 °C |
| | $T_E$ | 242 °C |

Nach Härtung während 6 Stunden bei 120 °C und 6 Stunden bei 180 °C:

| | | |
|---|---|---|
| GUT | (°C) | 89 |
| Zugscherfestigkeit ($N/mm^2$) | | 17 |

Beispiel IV

Beispiel II wird mit einem anderen Epoxidharz

auf Basis von Bisphenol A, das einen Epoxidgehalt von 0,52 Äquivalenten/kg und einen Erweichungsbereich von 90–100 °C aufweist, wiederholt. Zu 100 Teilen Epoxidharz werden 5,1 Teile N-Methyl-N-cyanacetamid und 0,021 Teile 1-Methylimidazol gegeben.

Das homogene Gemenge weist folgende Eigenschaften auf:

| | | |
|---|---|---|
| Gelierzeit bei 140 °C | | 24'30" |
| Thermoanalyse | $T_B$ | 137 °C |
| | $T_{RGmax}$ | 172 °C |
| | $T_E$ | 241 °C |

Nach Härtung während 6 Stunden bei 120 °C und 6 Stunden bei 180 °C:

| | | |
|---|---|---|
| GUT | (°C) | 105 |
| Zugscherfestigkeit | ($N/mm^2$) | 18,5 |

Beispiel V

Beispiel II wird wiederholt, wobei das Epoxidharz erst auf 120 °C erhitzt wird und darin dann das N-Methyl-N-cyanacetamid und 1-Methylimidazol gelöst werdeń. Vor dem Giessen der Formstoffplatten wird die heisse Lösung von der miteingerührten Luft durch Vakuumbehandlung befreit. Nach Härtung während 12 Stunden bei 120 °C werden an den Formstoffplatten folgende Eigenschaften gemessen:

| | | |
|---|---|---|
| Schlagbiegefestigkeit | ($KJ/m^2$) | 28 |
| Biegefestigkeit | ($N/mm^2$) | 122/50* |
| Durchbiegung | (mm) | 7/ > 20* |
| Formbeständigkeit in der Wärme | (°C) | 87 |
| GUT | (°C) | 90 |
| $H_2O$-Aufnahme nach 4 Tagen Wasserlagerung bei Raumtemp. (%) | | 0,27 |
| Zugscherfestigkeit | ($N/mm^2$) | 19 |
| Dielektrischer Verlustfaktor tg δ; | 1%-Wert | 70 °C |
| | 5%-Wert | 85 °C |
| Dielektrizitätszahl bei 23 °C | | 3,2 |
| Spez. Durchgangswiderstand 23 °C (Ω·cm) | | $5{,}6\ 10^{16}$ |

* 1. Wert bei maximaler Last
2. Wert beim Bruch

**Patentansprüche**

1. Verfahren zur Herstellung von N-substituierten N-Cyancarbonsäureamiden der Formel I

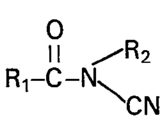

(I),

worin $R_1$ ein Waßerstoffatom, Alkyl mit 1–16 C-Atomen, Cycloalkyl mit 5–8 C-Atomen oder Aryl mit 6 oder 10 Ring-C-Atomen und $R_2$ ein Alkyl mit 1–8 C-Atomen, Cycloalkyl mit 5–8 C-Atomen oder Benzyl bedeuten, dadurch gekennzeichnet, dass man 1 Mol eines N-Cyancarbonsäureamidsalzes der Formel II

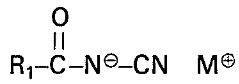

(II),

worin $R_1$ die gleiche Bedeutung wie in Formel II hat und $M^{\oplus}$ für ein Na- oder K-Kation steht, entweder mit 1 Mol einer Verbindung der Formel III

$R_2$–X (III),

worin $R_2$ die gleiche Bedeutung wie in Formel I hat und X für ein Chlor-, Brom- oder Jodatom steht, oder auch, für den Fall, dass $R_2$ in Formel I nur Methyl oder Äthyl bedeutet, mit 1 Mol Dimethyl bzw. Diäthylsulfat oder Trimethyl- bzw. Triäthylphosphat als Alkylierungsmittel in einem polaren aprotischen Lösungsmittel umsetzt.

2. Verfahren gemäss Anspruch 1, dadurch gekennzeichnet, dass man Verbindungen der Formel II einsetzt, worin $R_1$ ein Wasserstoffatom, Alkyl mit 1 bis 4 C-Atomen oder Phenyl bedeutet und $M^{\oplus}$ für ein Na-Kation steht.

3. Verfahren gemäss Anspruch 1, dadurch gekennzeichnet, dass man Verbindungen der Formel III einsetzt, worin $R_2$ ein Alkyl mit 1 bis 4 C-Atomen und X ein Chlor-, Brom- oder Jodatom bedeuten, oder Dimethylsulfat als Alkylierungsmittel verwendet.

4. Verwendung der nach dem Verfahren gemäss Anspruch 1 erhaltenen N-substituierten N-Cyancarbonsäureamide der Formel I als Härtungsmittel für Epoxidharze.

**Revendications**

1. Procédé pour préparer des N-cyano-carboxamides substitués à l'azote qui répondent à la formula I:

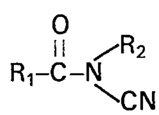

(I)

dans laquelle $R_1$ représente un atome d'hydrogène, un alkyle contenant de 1 à 16 atomes de carbone, un cycloalkyle en $C_5$–$C_8$ ou un aryle contenant de 6 à 10 atomes de carbone dans son ou ses noyaux, et $R_2$ représente un alkyle en $C_1$–$C_8$, un cycloalkyle en $C_5$–$C_8$ ou un benzyle, procédé caractérisé en ce qu'on fait réagir 1 mol d'un sel de N-cyano-carboxamide répondant à la formule II:

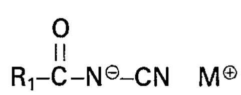

(II)

dans laquelle $R_1$ a la même signification que dans la formule I et $M^{\oplus}$ représente un cation de sodium

ou de potassium, soit avec 1 mol d'un composé répondant à la formule III:

$R_2$–X (III)

dans laquelle $R_2$ a la même signification que dans la formule I et X désigne un atome de chlore, de brome ou d'iode, soit, dans le cas où $R_2$, dans la formule I, ne représente qu'un méthyle ou un éthyle, avec 1 mol de sulfate de diméthyle ou de diéthyle ou de phosphate de triméthyle ou de triéthyle comme agent d'alkylation, dans un solvant aprotique polaire.

2. Procédé selon la revendication 1 caractérisé en ce qu'on utilise des composés de formule II dans lesquels $R_1$ représente un atome d'hydrogène, un alkyle contenant de 1 à 4 atomes de carbone ou un phényle, et $M^{\oplus}$ représente un cation de sodium.

3. Procédé selon la revendication 1 caractérisé en ce qu'on utilise, comme agent d'alkylation, un composé de formule III dans lequel $R_2$ représente un alkyle contenant de 1 à 4 atomes de carbone et X un atome de chlore, de brome ou d'iode, ou le sulfate de diméthyle.

4. Application des N-cyano-carboxamides substitués à l'azote qui répondent à la formule I et qui ont été obtenus par le procédé de la revendication 1, en tant que durcisseurs pour des résines époxydiques.

**Claims**

1. A process for the preparation of an N-substituted N-cyanocarboxylic acid amide of the formula I

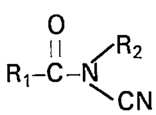 (I)

in which $R_1$ is a hydrogen atom, alkyl having 1–16 C atoms, cycloalkyl having 5–8 C atoms or aryl having 6 or 10 ring C atoms and $R_2$ is alkyl having 1–8 C atoms, cycloalkyl having 5–8 C atoms or benzyl, which comprises reacting 1 mol of an N-cyanocarboxylic acid amide salt of the formula II

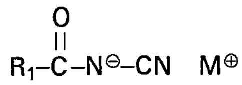 (II)

in which $R_1$ is as defined under formula II and $M^{\oplus}$ is an Na or K cation, either with 1 mol of a compound of the formula III

$R_2$–X (III)

in which $R_2$ is as defined under formula I and X is a chlorine, bromine or iodine atom, or, if $R_2$ in formula I is methyl or ethyl, with 1 mol of dimethyl or diethyl sulfate or trimethyl or triethyl phosphonate, as the alkylating agent, in a polar aprotic solvent.

2. A process according to claim 1, which comprises the use of a compound of the formula II in which $R_1$ is a hydrogen atom, alkyl having 1 to 4 C atoms or phenyl and $M^{\oplus}$ is an Na cation.

3. A process according to claim 1, which comprises the use of a compound of the formula III in which $R_2$ is alkyl having 1 to 4 C atoms and X is a chlorine, bromine or iodine atom, or of dimethyl sulfate as the alkylating agent.

4. Use of an N-substituted N-cyanocarboxylic acid amide of the formula I obtained by the process according to claim 1 as hardener for epoxy resins.